# FASCICULE DE BREVET EUROPEEN

(11) **EP 1 502 382 B1**
(45) Date de publication et mention de la délivrance du brevet: **08.12.2010**
(21) Numéro de dépôt: 03747490.5
(22) Date de dépôt: 05.05.2003
(51) Int. Cl.: H04L 9/08, H04N 7/167

(54) **PROCEDE DE CONTROLE D ACCES A UN RESEAU**
NETZWERKZUGANGSREGELVERFAHREN
NETWORK ACCESS CONTROL METHOD

(30) Priorité: 06.05.2002 FR 0205621
(43) Date de publication de la demande: 02.02.2005
(73) Titulaire: SAGEM COMMUNICATIONS SAS, 92848 Rueil Malmaison Cedex (FR)
(72) Inventeur: CHABANNE, Hervé, F-78200 Mantes-la-Jolie (FR)
(74) Mandataire: Fruchard, Guy
(86) Numéro de dépôt international: PCT/FR2003/001388
(87) Numéro de publication internationale: WO 2003/094421

(56) Documents cités:
- US-B1- 6 266 417
- GUILLOU ET AL.: "ENCIPHERMENT AND CONDITIONAL ACCESS" SMPTE JOURNAL, vol. 103, no. 6, juin 1994 (1994-06), pages 398-406, XP000457575 WHITE PLAINS (US)

## Description

La présente invention concerne un procédé de contrôle d'accès à un réseau de plusieurs utilisateurs tel qu'un réseau de télévision, un réseau de communication, un réseau informatique de type Internet ou plus généralement un réseau de transfert de données.

Lorsque, dans un tel réseau, les informations transitent sous la forme de signaux qui pourraient être également captés par des utilisateurs non autorisés par l'administrateur du réseau, il est connu de chiffrer et/ ou de brouiller les signaux avant leur émission sur le réseau et de fournir à chaque utilisateur autorisé des clés permettant de reconstituer les signaux chiffrés et/ ou brouillés.

L'administrateur du réseau délivre à chaque utilisateur un système d'accès qui comprend un terminal pourvu de moyens de liaison au réseau et d'une mémoire contenant une clé personnelle d'exploitation et des données personnelles relatives à l'utilisateur. La clé personnelle d'exploitation est utilisée pour déchiffrer une clé de service qui est commune à plusieurs utilisateurs et qui est transmise chiffrée au terminal de chacun de ces utilisateurs via le réseau. La clé de service est utilisée pour déchiffrer une information de décodage qui est commune à tous les utilisateurs et qui est transmise chiffrée aux terminaux par le réseau. L'information de décodage est utilisée pour reconstituer le signal brouillé émis sur le réseau.

L'information de décodage étant commune à tous les utilisateurs et étant chiffrée au moyen des clés de service qui sont communes à plusieurs utilisateurs, la transmission de l'information de décodage à tous les utilisateurs est relativement rapide. L'information de décodage peut donc être renouvelée selon une fréquence élevée, typiquement toutes les dix secondes.

En revanche, les clés de service étant chiffrées au moyen de la clé personnelles de chaque utilisateur, il faut transmettre autant de clés de service chiffrées qu'il y a d'utilisateurs autorisés de sorte que la transmission des clés de service à tous les utilisateurs est relativement longue. Les clés de service sont pour cette raison renouvelées seulement tous les mois, la transmission des clés de service d'un mois donné étant réalisée durant le mois qui précède. Il est à noter que dans certains cas, la clé d'exploitation est partagée par plusieurs utilisateurs. Cependant, compte tenu du nombre restreint des utilisateurs partageant la même clé d'exploitation par rapport au nombre total d'utilisateurs, cette clé d'exploitation peut être considérée comme une clé personnelle. De plus, même dans ce cas, le nombre de clés de services chiffrées à transmettre est encore très élevé et rend nécessaire de transmettre les clés de service d'un mois donné durant le mois qui précède.

Cette superposition de niveaux de chiffrement au moyen de clés et d'information de décodage de diffusions différentes limitent avec une relative efficacité les possibilités d'accès au réseau pour les personnes non autorisées. Un tel procédé de contrôle d'accès est décrit dans l'article de Guillou: Encipherment and conditional Access", SMPTE Journal , June 1994, p. 398-406.

Toutefois, il existe un risque qu'un fraudeur se procure une clé personnelle d'exploitation. Il peut alors chaque mois déchiffrer la clé de service du mois suivant et dispose d'une durée importante pour la communiquer à un grand nombre de personnes non autorisées de manière à permettre à celles-ci d'accéder aux informations circulant sur le réseau.

Un but de l'invention est de proposer un moyen de contrôle d'accès à un réseau offrant plus de sécurité.

A cet effet, on prévoit, selon l'invention un procédé de contrôle d'accès à un réseau de plusieurs utilisateurs équipés chacun d'un système comportant un terminal pourvu de moyens de liaison au réseau et une mémoire contenant une clé personnelle d'exploitation. Ce procédé comprend les étapes de :
- avant une période de temps prédéterminée, enregistrer dans une mémoire du système de chaque utilisateur un groupe de clés de service communes à au moins deux utilisateurs et valables chacune pendant une fraction de la période de temps prédéterminée, un chiffrement de chaque clé de service étant préalablement effectué au moyen de la clé personnelle d'exploitation et d'une clé d'activation qui est propre à la fraction de la période de temps prédéterminée et qui est commune aux deux utilisateurs,
- au début de chaque fraction de la période de temps prédéterminée, transmettre à chaque système via le réseau la clé d'activation correspondant à la fraction concernée de la période de temps prédéterminée,
- déchiffrer dans chaque système la clé de service chiffrée en utilisant la clé d'exploitation et la clé d'activation.

Ainsi, le déchiffrement de chaque clé de service n'est possible qu'au début de la fraction concernée de la période de temps prédéterminée. La clé d'activation étant commune à plusieurs utilisateurs, la transmission d'une clé d'activation à tous les utilisateurs est relativement rapide.

Avantageusement, chaque clé d'activation est commune à tous les utilisateurs.

La transmission d'une clé d'activation a tous les utilisateurs est alors encore plus rapide.

Selon une caractéristique particulière de l'invention, le chiffrement de chaque clé de service comprend deux phases successives de chiffrement, à savoir une phase de chiffrement au moyen de la clé personnelle d'exploitation et une phase de chiffrement au moyen de la clé d'activation.

Le procédé conforme à l'invention peut alors être mis en oeuvre au moyen de technologies sensiblement de même niveau de complexité que les technologies actuellement utilisées.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

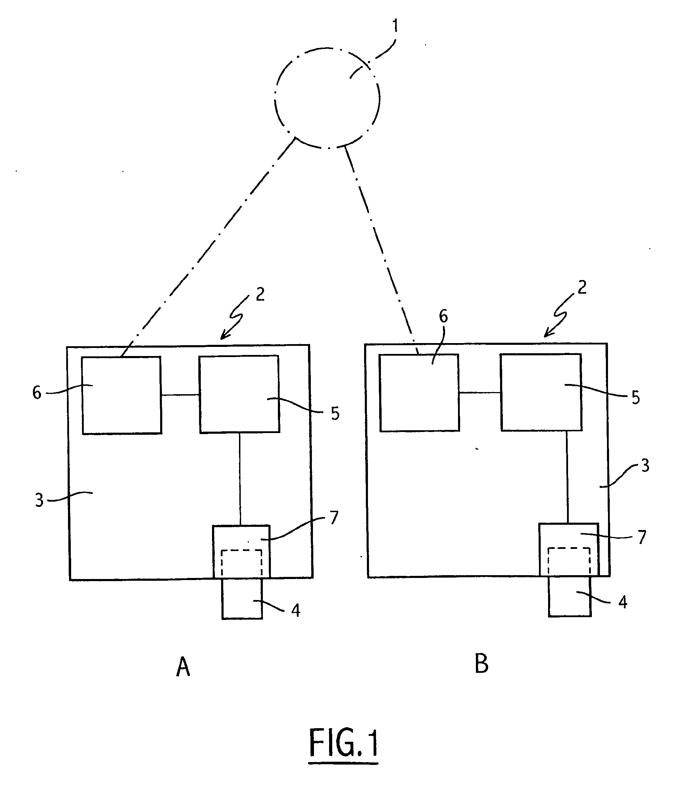

- la figure 1 est une représentation schématique d'un réseau utilisable pour la mise en oeuvre de l'invention,

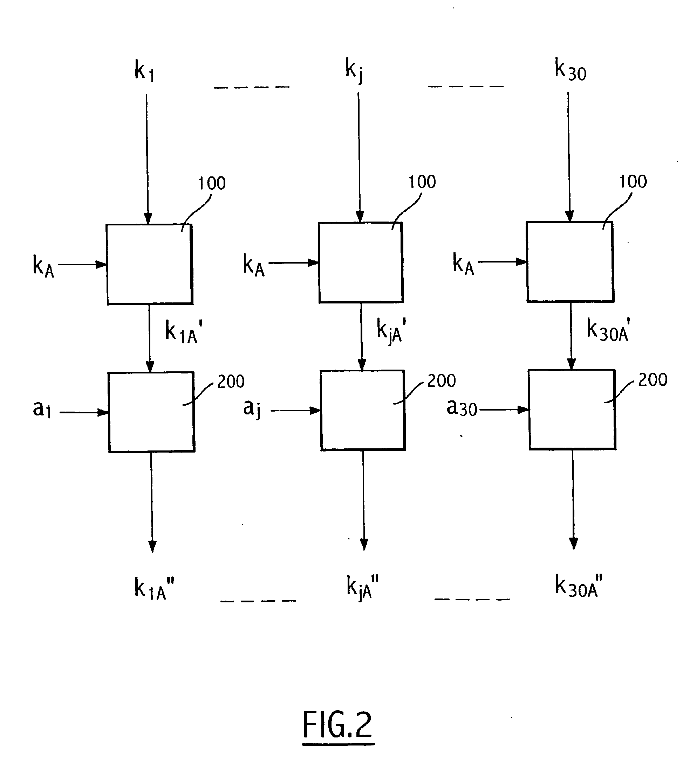

- la figure 2 est un diagramme représentant une étape de chiffrement des clés de service dans le procédé conforme à l'invention,

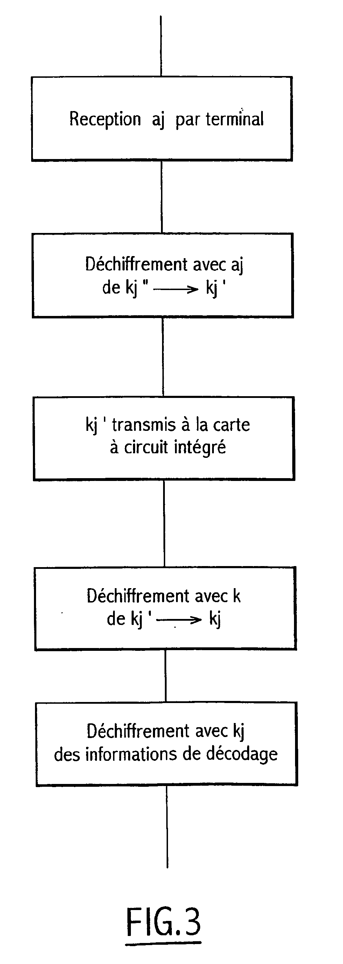

- la figure 3 est un diagramme illustrant une étape de déchiffrement d'une clé de service dans le procédé conforme à l'invention.

En référence aux figures, le procédé conforme à l'invention est destiné à être utilisé dans un réseau 1 géré par un administrateur et sur lequel circulent des signaux chiffrés ou brouillés représentant des informations ou des données auxquelles des utilisateurs tels que A et B peuvent accéder moyennant une autorisation de l'administrateur du réseau. Le procédé a donc pour but de s'assurer que seuls ont accès aux informations les utilisateurs autorisés, dont A et B.

Chaque utilisateur A, B dispose d'un système d'accès généralement désigné en 2 qui comprend un terminal 3 et une carte à circuit intégré 4.

Chaque terminal 3 comprend des moyens informatiques de commande 5 qui comprennent de façon connue en elle-même un microprocesseur et une mémoire. Les moyens informatiques de commande 5 sont agencés pour opérer un déchiffrement de clés et d'informations de décodage qui sont transmises au terminal 3 via le réseau et un décodage d'un signal brouillé transmis par le réseau, comme on le verra de manière plus détaillée dans la suite de la description.

Les moyens informatiques de commande 5 sont reliés à des moyens de liaison 6 au réseau 1 (par exemple une antenne assurant une liaison par voie hertzienne avec un émetteur du réseau 1) et un lecteur 7 destiné à recevoir la carte à circuit intégré 4.

La carte à circuit intégré 4 contient de façon connue en soi une clé personnelle d'exploitation K (nommée K_{A} pour l'utilisateur A et K_{B} pour l'utilisateur B).

Dans le procédé de contrôle d'accès de l'invention, avant une période de temps prédéterminée, l'administrateur élabore des clés de service k communes à tous les utilisateurs et valables chacune pendant une fraction de la période de temps prédéterminée. A titre d'exemple, la période de temps prédéterminée correspond au mois M et la fraction de la période de temps prédéterminée correspond à un jour j. Dans ce cas, avant le mois M-1 précédant le mois M, l'administrateur élabore 30 clés de services kⱼ pour le mois M (dans l'hypothèses où celui-ci comporte 30 jours).

Pour chaque utilisateur A, B, un chiffrement de chaque clé de service kⱼ est effectué au moyen de la clé personnelle d'exploitation K_{A}, K_{B} et d'une clé d'activation aⱼ qui est propre à la fraction j de la période de temps prédéterminée et qui est commune à tous les utilisateurs.

En prenant l'exemple de l'utilisateur A, le chiffrement de chaque clé de service kⱼ comprend une phase de chiffrement 100 au moyen de la clé personnelle d'exploitation K_{A} pour obtenir une clé de service chiffrée k_{jA}' et une phase de chiffrement 200 au moyen de la clé d'activation aⱼ pour obtenir une clé chiffrée k_{jA}". Il est ainsi obtenu un groupe de 30 clés de service chiffrées k_{1A}" ,..., k_{jA}"', ..., k_{30A}.

Au début du mois M-1, le groupe de clés chiffrées k_{jA}", k_{jB}" est envoyé au terminal 3 de l'utilisateur A, B correspondant et est enregistré dans la mémoire du terminal 3.

Le jour j, la clé d'activation aⱼ est transmise via le réseau 1 au terminal 3 de chaque utilisateur A, B.

Les moyens informatiques de commande 4 procèdent au déchiffrement de la clé de service chiffrée k_{jA}", k_{jB}" en utilisant la clé d'activation aⱼ. La clé de service chiffrée k_{jA}', k_{jB}' est alors obtenue et est transmise par le terminal 3 à la carte à circuit intégré 4.

La carte à circuit intégré 4 procède au déchiffrement de la clé de service chiffrée k_{jA}', k_{jB}' en utilisant la clé d'exploitation K_{A}, K_{B}. La clé de service kⱼ déchiffrée est alors obtenue.

La clé de service kⱼ est alors utilisée dans les cartes à circuit intégré 4 pour déchiffrer une information de décodage chiffrée transmise par le réseau 1 aux terminaux 3. Cette information chiffrée est utilisée après déchiffrement pour décoder le signal brouillé transmis par le réseau 1 aux terminaux 3. Le signal décodé peut alors être exploité par un téléviseur par exemple dans le cas d'un réseau de télévision. A noter qu'une nouvelle information de décodage est ici transmise toutes les dix secondes sur le réseau 1, de sorte que l'étape de déchiffrement de l'information de décodage doit être également réalisée selon cette période.

Bien entendu, l'invention n'est pas limitée au mode de mise en oeuvre décrit et on peut y apporter des variantes de réalisation sans sortir du cadre de l'invention tel que défini par les revendications.

En particulier, l'architecture du système peut être différente de celle décrite et par exemple ne pas comprendre de carte à circuit intégré, la clé personnelle d'exploitation étant contenue dans un autre type de support ou directement dans une mémoire du terminal.

Les clés de services ou les clés d'activation peuvent être communes à une partie seulement des utilisateurs. Les clés personnelles d'exploitation peuvent être communes à un nombre d'utilisateurs qui est restreint par rapport au nombre total d'utilisateurs.

La période de temps prédéterminée et / ou la fraction de la période de temps prédéterminée peuvent être modifiées. Par exemple, pour renforcer la sécurité du procédé, la fraction de la période de temps prédéterminée peut être de quelques secondes à quelques heures.

Les phases 100 et 200 de chiffrement des clés de service peuvent être interverties. Le chiffrement de chaque clé de service peut également être réalisé en une étape unique avec la clé personnelle d'exploitation et la clé d'activation.

Le déchiffrement de la clé de service au moyen de la clé d'activation peut être réalisé dans le terminal comme décrit ci-dessus ou alors dans la carte à circuit intégré.

Le déchiffrement de l'information de décodage peut être réalisé dans la carte à circuit intégré comme décrit ci-dessus ou alors dans le terminal, la clé de service déchiffrée étant alors transmise au terminal pour le déchiffrement.

Par ailleurs, l'invention est applicable à tout type de réseau et notamment les réseaux de communication, les réseaux informatiques et les réseaux de télévision («broadcast»).

## Revendications

1. Procédé de contrôle d'accès à un réseau (1) de plusieurs utilisateurs équipés chacun d'un système (2) comportant un terminal (3) pourvu de moyens (6) de liaison au réseau et une mémoire (7) contenant une clé personnelle d'exploitation (K), **caractérisé en ce que** le procédé comprend les étapes de :
- avant une période de temps prédéterminée M, enregistrer dans une mémoire du système (2) de chaque utilisateur un groupe de clés de service (kⱼ) communes à au moins deux utilisateurs et valables chacune pendant une fraction j de la période de temps prédéterminée, un chiffrement de chaque clé de service (kⱼ) étant préalablement effectué au moyen de la clé personnelle d'exploitation (K) et d'une clé d'activation (aⱼ) qui est propre à la fraction de la période de temps prédéterminée et qui est commune aux deux utilisateurs,
- au début de chaque fraction j de la période de temps prédéterminée M, transmettre à chaque système (2) via le réseau (1) la clé d'activation (aⱼ) correspondant à la fraction j concernée de la période de temps prédéterminée,
- déchiffrer dans chaque système (2) la clé de service (kⱼ) chiffrée en utilisant la clé personnelle d'exploitation (K) et la clé d'activation (aⱼ).

2. Procédé selon la revendication 1, **caractérisé en ce que** chaque clé d'activation (aⱼ) est commune à tous les utilisateurs.

3. Procédé selon la revendication 1, **caractérisé en ce que** le chiffrement de chaque clé de service (kⱼ) comprend deux phases successives de chiffrement, à savoir une phase de chiffrement au moyen de la clé personnelle d'exploitation (K) et une phase de chiffrement au moyen de la clé d'activation (aⱼ).

4. Procédé selon la revendication 1, **caractérisé en ce que** la clé de service (kⱼ) est utilisée dans les systèmes (2) pour déchiffrer une information chiffrée transmise par le réseau (1) aux terminaux (3).

5. Procédé selon la revendication 4, **caractérisé en ce que** l'information chiffrée est utilisée après déchiffrement pour décoder un signal brouillé transmis par le réseau (1) aux terminaux (3).

6. Procédé selon la revendication 1, **caractérisé en ce que** chaque terminal (3) est pourvu d'un lecteur de cartes à circuit intégré (7) et **en ce que** chaque système (2) comprend une carte à circuit intégré (4) ayant une mémoire constituant la mémoire contenant la clé personnelle d'exploitation (K).

## Claims

1. A method of controlling access to a network (1) of a plurality of users, each provided with a system (2) comprising a terminal (3) provided with means (6) for linking to the network and a memory (7) containing a personal operating key (K), the method being **characterized in that** it comprises the following steps:
· before a predetermined time period M, storing in a memory of each user's system (2) a group of service keys (kⱼ) common to at least two users and each valid during a fraction j of the predetermined time period, each service key (kⱼ) being previously encrypted by means of the personal operating key (K) and of an activation key (aⱼ) that is specific to the fraction of the predetermined time period and that is common to the two users;
· at the beginning of each fraction j of the predetermined time period M, transmitting to each system (2) via the network (1) the activation key (aⱼ) corresponding to the fraction j in question of the predetermined time period; and
decrypting in each system (2) the encrypted service key (kⱼ) by using the personal operating key (K) and the activation key (aⱼ).

2. A method according to claim 1, **characterized in that** each activation key (aⱼ) is common to all of the users.

3. A method according to claim 1, **characterized in that** the encryption of each service key (kⱼ) comprises two successive stages of encryption, namely a stage of encryption using the personal operating key (K) and a stage of encryption using the activation key (aⱼ).

4. A method according to claim 1, **characterized in that** the service key (kⱼ) is used in the systems (2) for decrypting encrypted information transmitted by the network (1) to the terminals (3).

5. A method according to claim 4, **characterized in that** the encrypted information is used after decryption to decode a scrambled signal transmitted by the network (1) to the terminals (3).

6. A method according to claim 1, **characterized in that** each terminal (3) is provided with a smart card reader (7), and **in that** each system (2) includes a smart card (4) having a memory constituting the memory that contains the personal operating key (K).

## Patentansprüche

1. Verfahren zur Kontrolle des Zugriffs auf ein Netzwerk (1) von mehreren Nutzern, die jeweils mit einem System (2) ausgestattet sind, das einen Terminal (3) umfasst, der mit Mitteln (6) zur Verbindung mit dem Netzwerk und einem Speicher (7) versehen ist, der einen persönlichen Nutzungsschlüssel (K) enthält, **dadurch gekennzeichnet, dass** das Verfahren die Schritte umfasst:
- Speichern vor einem vorgegebenen Zeitabschnitt M einer Gruppe von Betriebsschlüsseln (kⱼ), die mindestens zwei Nutzern gemeinsam und jeweils für einen Bruchteil j des vorgegebenen Zeitabschnittes gültig sind, in einen Speicher des Systems (2) jedes Nutzers, wobei eine Verschlüsselung jedes Betriebsschlüssels (kⱼ) zuvor mittels des persönlichen Nutzungsschlüssels (K) und eines Aktivierungsschlüssels (aⱼ) durchgeführt wurde, der dem Bruchteil des vorgegebenen Zeitabschnittes zugeordnet und zwei Nutzern gemeinsam ist,
- Übertragen zu Beginn jedes Bruchteils j des vorgegebenen Zeitabschnittes M desjenigen Aktivierungsschlüssels (aⱼ), der dem betreffenden Bruchteil des vorgegebenen Zeitabschnittes entspricht, an jedes System (2) über das Netzwerk (1),
- Entschlüsseln des verschlüsselten Betriebsschlüssels (kⱼ) in jedem System (2) unter Verwendung des persönlichen Nutzungsschlüssels (K) und des Aktivierungsschlüssels (aⱼ).

2. Verfahren nach Anspruch 1, **dadurch gekennzeichnet, dass** jeder Aktivierungsschlüssel (aⱼ) allen Nutzern gemeinsam ist.

3. Verfahren nach Anspruch 1, **dadurch gekennzeichnet, dass** die Verschlüsselung jedes Betriebsschlüssels (kⱼ) zwei aufeinander folgende Verschlüsselungsphasen umfasst, nämlich eine Verschlüsselungsphase mittels des persönlichen Nutzungsschlüssels (K) und eine Verschlüsselungsphase mittels des Aktivierungsschlüssels (aⱼ).

4. Verfahren nach Anspruch 1, **dadurch gekennzeichnet, dass** der Betriebsschlüssel (kⱼ) in den Systemen (2) dazu verwendet wird, eine verschlüsselte Information, die über das Netzwerk (1) zu den Terminals (3) übertragen wird, zu entschlüsseln.

5. Verfahren nach Anspruch 4, **dadurch gekennzeichnet, dass** die verschlüsselte Information nach dem Entschlüsseln dazu verwendet wird, ein gestörtes Signal, das über das Netzwerk (1) zu den Terminals (3) übertragen wird, zu dekodieren.

6. Verfahren nach Anspruch 1, **dadurch gekennzeichnet, dass** jeder Terminal (3) mit einem Kartenleser (7) für Karten mit integriertem Schaltkreis versehen ist und dass jedes System (2) eine Karte (4) mit integriertem Schaltkreis umfasst, die einen Speicher hat, der den Speicher bildet, welcher den persönlichen Nutzungsschlüssel (K) enthält.
